# EUROPEAN PATENT APPLICATION

(11) **EP 2 423 467 A2**
(43) Date of publication of application: **29.02.2012**
(21) Application number: 10158082.7
(22) Date of filing: 26.03.2010
(51) Int. Cl.: F01K 23/06, F01K 23/10, F02C 6/18

(54) **Systems, Methods, And Apparatus For Modifying Power Output And Efficiency of A Combined Cycle Power Plant**

(30) Priority: 31.03.2009 US 414953
(71) Applicant: General Electric Company, Schenectady, NY 12345 (US)
(72) Inventor: Saha, Rajarshi, 560066 Bangalore, Karnataka (IN); Lokanath, Shrivaprasad, 575014 Bangalore, Karnataka (IN); Mazumder, Indrajit, 560066 Bangalore, Karnataka (IN); Gopalkrishna, Vinod Kumar Baikampady, 560066 Bangalore, Karnataka (IN)
(74) Representative: Gray, Thomas

(57) **Abstract**

Embodiments of the invention can provide systems, methods, and an apparatus for modifying the power output and efficiency of a combined cycle power plant. According to one embodiment where a combined cycle power plant includes a compressor (110), a gas turbine (105), a combustor (120), and a heat recovery steam generator (110), excess air from the compressor (110) can be extracted and expanded to generate power. The expanded air can then be mixed with at least one combustible fuel to generate a heated combustion product. The heated combustion product can be mixed with exhaust gas from the gas turbine (105) to increase the temperature of the exhaust gas prior to introduction to the heat recovery steam generator (110). This increase in temperature of the exhaust gas from the gas turbine (105) provides additional energy for generating steam and power and improves performance of the heat recovery steam generator (110).

## Description

### FIELD OF THE INVENTION

The invention relates to a combined cycle power plant, and more specifically to systems, methods, and an apparatus for modifying power output and efficiency of a combined cycle power plant.

### BACKGROUND OF THE INVENTION

A combined cycle power plant can use a combination of a gas turbine and a steam turbine to produce electrical power. In a combined cycle power plant, a gas turbine cycle can be operatively combined with a steam turbine cycle by way of a heat recovery steam generator ("HRSG").

In a combined cycle power plant, the gas turbine cycle can be referred to as a topping cycle, and the steam turbine cycle can be referred to as a steam bottoming cycle. The gas turbine topping cycle typically has at least one compressor, at least one combustor, and an expander. In the compressor, air is pressurized to mix with a fuel for burning. The air/fuel mixture is then burned in the combustor. This operation results in a high temperature combustion product, which is then expanded in the expander section of the gas turbine to produce power. The exhaust flow exiting the gas turbine is then directed to the HRSG for producing steam and power production using the steam turbine.

In some gas turbine applications, the gas turbine pressure ratio exceeds the operational pressure limits of the compressor, resulting in compressor surge. This compressor surge can occur when low BTU (British Thermal Unit) fuels are used. Examples of low BTU fuels include coke oven gas, coal gas, reformed petroleum product gas, and blast furnace gas. When compressor surge occurs, it reduces the power output and efficiency of the gas turbine and can also cause a catastrophic failure in the system.

One solution for preventing compressor surge is bleeding off excess compressor discharge air from the last stage extraction point and discharging the air into the atmosphere. Because this excess air contains energy in the form of pressure energy, more efficient methods of managing the excess air are generally sought. One method recirculates the excess discharge air back to the compressor inlet rather than in the atmosphere. This method of gas turbine operation, known as Inlet Bleed Heat (IBH) Control, raises the inlet temperature of the compressor inlet air by mixing the colder ambient air with the bleed portion of the hot compressor discharge air. While this approach eliminates compressor surge, mixing the cold ambient air with the hot discharge air results in reduced air density and mass flow to the gas turbine. Consequently, gas turbine performance declines, and the amount of available gas turbine exhaust dwindles. This reduced gas turbine exhaust flow produces less steam in the HRSG and consequently, less steam turbine power output.

Another solution for preventing compressor surge is to bleed off excess compressor discharge air and to mix it with the gas turbine exhaust prior to the exhaust's entry into the HRSG. The excess discharge air, though, while hotter than the ambient air at the compressor's inlet, is still colder than the gas turbine exhaust. Thus, when the two gases are mixed, the air temperature at the inlet of the HRSG is reduced, and with less heat provided to its inlet, the HRSG is unable to produce the same amount of steam. Moreover, because the discharge air contains energy in the form of pressure energy, this energy is wasted when fed directly to the inlet of the HRSG.

Thus, there is a need for systems, methods, and an apparatus for modifying power output and efficiency of a combined cycle power plant.

### BRIEF DESCRIPTION OF THE INVENTION

Embodiments of the invention can address some or all of the needs described above. Certain embodiments of the invention are directed generally to systems, methods, and apparatus for modifying the power output and efficiency of a combined cycle power plant. According to one embodiment, a method for modifying the power output and efficiency of a combined cycle power plant can be provided, wherein the combined cycle power plant includes a compressor for a gas turbine, a combustor, and a heat recovery steam generator ("HRSG"). The method can include extracting excess air from the compressor and expanding the excess air to generate power. The method can also include mixing the expanded air with a combustible fuel to generate a heated combustion product. The method can further include mixing the heated combustion product with exhaust from the gas turbine so that the temperature and mass flow of the exhaust is increased prior to being introduced to the HRSG.

According to another embodiment of the invention, a system for modifying the power output and efficiency of a combined cycle power plant system can be provided. The system can include a compressor of a gas turbine, wherein the compressor is operable to generate compressed air and is further operable to extract excess compressed air to maintain performance of the gas turbine. The system can also include a combustor operable to mix at least a portion of the compressed air with a combustible fuel to generate a heated combustion product and to operate a gas turbine to produce power. The system can also include an air expander operable to receive the excess compressed air from the compressor and to expand it to produce power. Furthermore, the system can include a fired heater operable to receive the expanded excess air from the air expander and to mix the expanded air with the combustible fuel to generate a heated combustion product. Finally, the system can include a HRSG operable to receive the heated combustion product from the fired heater and the exhaust from the gas turbine for power production.

According to yet another embodiment of the invention, an apparatus for modifying the power output and efficiency of a combined cycle power plant system, wherein the combined cycle power plant system includes a compressor for a gas turbine, a combustor, and a HRSG, can be provided. The apparatus can include a fired heater operable to receive expanded air and to mix the expanded air with a combustible fuel. The apparatus can be further adapted to combust a mixture of expanded air and the combustible fuel to generate a heated combustion product. In addition, the apparatus can be modified to mix the heated combustion product with exhaust from the gas turbine and to direct the mixture to the HRSG.

Other embodiments and aspects of the invention will become apparent from the following description taken in conjunction with the following drawings.

### BRIEF DESCRIPTION OF THE DRAWINGS

Having thus described the invention in general terms, reference will now be made to the accompanying drawings, which are not necessarily drawn to scale, and wherein:
FIG. 1 illustrates an example prior art combined cycle power plant.
FIG. 2 illustrates an exemplary system for modifying the power output and efficiency of a combined cycle power plant.
FIG. 3 illustrates an exemplary method for modifying the power output and efficiency of a combined cycle power plant.

### DETAILED DESCRIPTION OF THE INVENTION

The invention now will be described more fully hereinafter with reference to the accompanying drawings, in which example embodiments of the invention are shown. This invention may, however, be embodied in many different forms and should not be construed as limited to the example embodiments set forth herein; rather, these embodiments are provided so that this disclosure will convey the scope of the invention to those skilled in the art. Like numbers refer to like elements throughout.

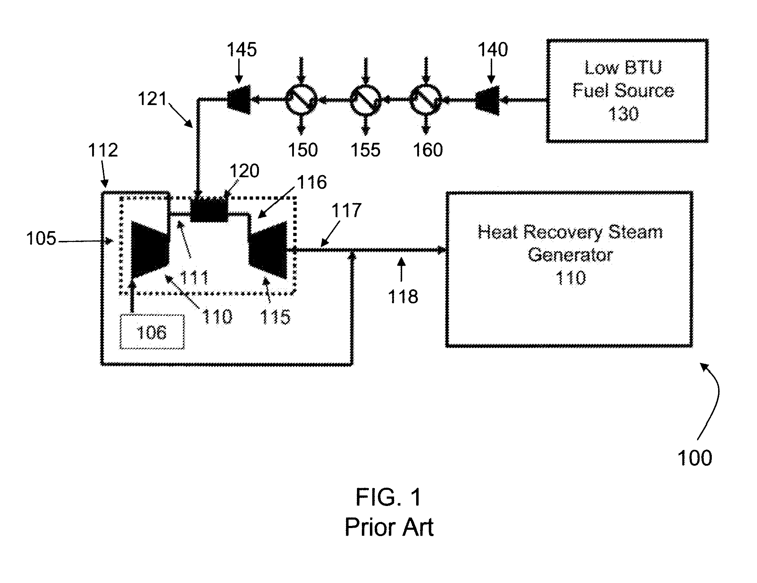

FIG. 1 illustrates a conventional combined cycle system 100 with a gas turbine topping cycle 105 thermally coupled to a steam turbine bottoming cycle or, as illustrated in the diagram, heat recovery steam generator ("HRSG") system 110. Simple cycle gas turbine system 105 includes a compressor 110, a turbine component 115, a combustor 120, and a load (e.g., a generator) arranged on a single rotor or shaft (not pictured). Combustor 120 receives fuel via stream 121, and compressed air from compressor 110 via stream 111, and any hot excess discharge air is bled from compressor 110 via stream 112. Combustion gases are introduced into turbine component 115 via stream 116, and gas turbine exhaust exits the gas turbine via stream 117.

Also present in system 100 is source 130 for low BTU (British Thermal Unit) fuel. Potential sources of low BTU fuel are known within the art. For example, two types of low BTU fuel are coke oven gas and blast furnace gas, and a common source for these fuels is a steel mill plant or process. Other sources of low BTU fuel will also be appreciated within the art. In system 100, low BTU fuel is provided by source 130 to combustor 120 via stream 121 after it has been conditioned for combustion. In system 100, conditioning is provided by fuel gas compressors 140 and 145 as well as by high pressure intercoolers 150, 155, and 160. In system 100, fuel gas compressors 140 and 145 are operable to raise the pressure of the low BTU fuel to a required level so that it can be used by combustor 120. Intercoolers 150, 155, and 160 are operable to cool the compressed fuel in intermediate stages to reduce the compressor load.

When a compressor surge condition occurs, a compressor discharge bleed air circuit is typically used to direct the excess discharge air so that it will bypass combustor 120. In system 100, the excess discharge air is mixed directly with the gas turbine exhaust via stream 118 before entering HRSG system 110. By removing the excess compressor discharge air and feeding it directly to the gas turbine exhaust in stream 117, the compressor pressure ratio limit is protected. In addition, when compared to legacy systems that recirculate the excess discharge air back to the inlet of compressor 110 at inlet guide valve 106, this arrangement does not increase the compressor inlet air temperature. Compressor 110 may then enjoy the full benefit of low ambient temperatures, which preserves the power output of gas turbine topping cycle 105.

There is a disadvantage, however, to mixing the excess discharge air with the gas turbine exhaust. The excess discharge air, being at a high pressure, contains a large amount of pressure energy. This pressure energy is wasted when the excess discharge air is mixed with the gas turbine exhaust because the pressure of the excess discharge air is reduced to almost ambient pressure prior to being mixed with the gas turbine exhaust and input into HRSG system 110. Embodiments of the claimed inventions can address some or all of the needs described above.

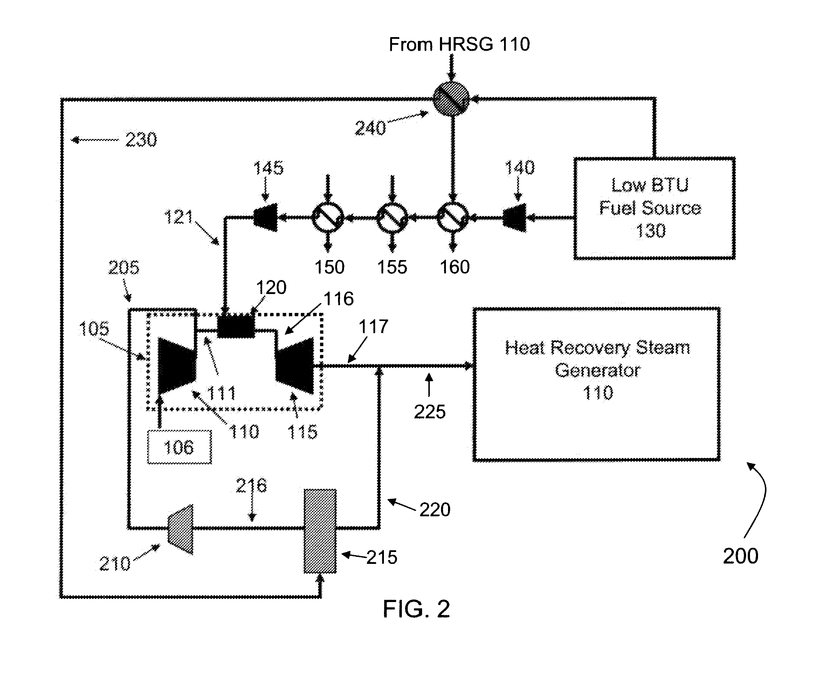

FIG. 2 illustrates an exemplary system 200 for modifying the power output and efficiency of a combined cycle power plant according to one aspect of the invention.

It should be appreciated that while the systems, methods, and apparatus described herein reference only a single gas turbine coupled to a single HRSG system, systems using multiple gas turbines, steam turbines, and HRSG systems can also be adapted to employ the systems, methods, and apparatus disclosed so that they may capitalize on the advantages they provide.

Similar to legacy system 100, system 200 includes a gas turbine topping cycle 105 thermally coupled to HRSG system 110. Gas turbine system 105 includes a compressor 110, a turbine component 115, a combustor 120, and a load (e.g., a generator) arranged on a single rotor or shaft (not pictured). Combustor 120 receives fuel via stream 121, and compressed air from compressor 110 via stream 111, and combustion gases are introduced into turbine component 115 via stream 116. Gas turbine exhaust continues to exit the gas turbine via stream 117. Also present in system 200 is source 130 for low BTU fuel, and conditioning of the low BTU fuel is provided by fuel gas compressors 140 and 145 as well as by intercoolers 150, 155, and 160.

Unlike system 100, hot excess discharge air is bled from compressor 110 via stream 205, which channels the high pressure excess discharge air to air expander 210. As has been described, when low BTU fuels are used in a gas turbine topping cycle, the gas turbine pressure ratio exceeds the operational pressure limits of the compressor, resulting in compressor surge. In system 200, this compressor surge can be controlled by a compressor discharge bleed air circuit that will direct the excess discharge air to bypass combustor 120 via stream 205. In doing so, the compressor discharge bleed air circuit can ensure that gas turbine topping cycle 105 continues to operate properly and is not harmed by compressor surge.

Air expander 210 is operable to generate power by expanding the high pressure excess discharge air. Embodiments of air expander 210 can include, but are not limited to, a turbo-expander and an expansion turbine.

Expanded air from air expander 210 is introduced to fired heater 215 via stream 216. Fired heater 215 is operable to mix expanded air from air expander 210 with one or more combustible excess fuels available in the process to produce a heated combustion product. Embodiments of fired heater 215 can include, but are not limited to, the following: a duct burner, a supplementary combustion chamber, and an external combustor.

The heated combustion product exits fired heater 215 via stream 220 and is mixed with gas turbine exhaust from stream 117 in stream 225 using a mixing "tee" (not pictured). The temperature of the new mixture of heated combustion product and gas turbine exhaust is higher than the temperature of the gas turbine exhaust alone. As a result, the additional heat at HRSG 110 enables HRSG 110 to generate more steam and to generate more power. This increase in power output combined with the power produced by air expander 210 makes system 200 more efficient and more productive than legacy system 100.

In exemplary system 200, a source of combustible fuel for fired heater 215 is provided by a low BTU fuel source 130 via stream 230. According to one aspect of the invention, when source 130 is a steel mill or process, excess blast furnace gas can be siphoned off and provided to fired heater 215 for combustion with expanded air from air expander 210. As with other low BTU fuels, excess blast furnace gas can be conditioned prior to combustion. In exemplary system 200, conditioning of low BTU fuels from source 130 is provided by high pressure water heat exchanger 240 using the water source from HRSG 110. High pressure water heat exchanger 240 raises the temperature of the low BTU fuel so that combustion of the low BTU fuel in fired heater 215 requires less energy.

It will be appreciated that there are many other embodiments of fuel sources that can be used as well as conditioning systems for preparing the fuels for mixture with the expanded air to generate a heated combustion product.

In another embodiment, rather than mix the heated combustion product via stream 220 with gas turbine exhaust from stream 117 in stream 225, at least a portion of the heated combustion product can be provided to a vapor absorption chiller (not pictured), which can be connected indirectly to inlet duct 106 of compressor 110. The vapor absorption chiller would be operable to receive the heated combustion product as a heat source to produce cooled media, which in turn indirectly reduces the inlet air temperature for compressor 110. With cooler air at the compressor inlet, the efficiency of compressor 110 can be increased since less energy is required to compress cooler air when compared to warmer air. Consequently, as the efficiency of compressor 110 increases, so does the efficiency of gas turbine topping cycle 105.

In yet another embodiment, at least a portion of the heated combustion product can be provided to warm the water source for HRSG 110. By providing warmer water to HRSG 110, HRSG 110 may require less energy to generate steam. Therefore, the efficiency of HRSG 110 can be improved.

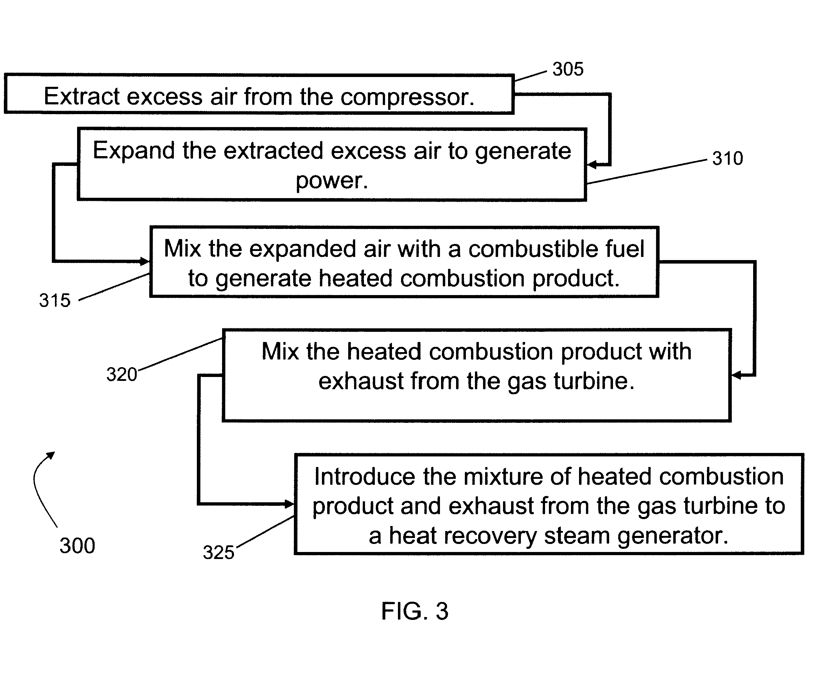

FIG. 3 illustrates exemplary method 300 for modifying the power output and efficiency of a combined cycle power plant that includes a gas turbine, a compressor for the gas turbine, a combustor, and a HRSG. The method begins at block 305 where excess air is extracted from the compressor. One embodiment for performing this element of method 300 is illustrated by system 200. In system 200, a low BTU fuel is provided to combustor 120 via stream 121. As has been described, when low BTU fuels are used in a gas turbine topping cycle, the gas turbine pressure ratio exceeds the operational pressure limits of the compressor, resulting in compressor surge. Hence, block 305 extracts this excess discharge air to preserve combustion and turbine performance. In one embodiment, this compressor surge can be controlled by a compressor discharge bleed air circuit. Other embodiments, which have been previously discussed, can also be used.

Method 300 continues at block 310 where excess air, which has been extracted from the compressor, is expanded to generate power. Again, referring to system 200 in FIG. 2, block 310 can be performed by air expander 210, which is provided excess compressor air via stream 205. In the exemplary embodiment, an air expander is used and, depending on the surge conditions at compressor 110, can produce around 6 megawatts of additional power. In other embodiments, other air expanders can be used depending on the availability of excess discharge air and other requirements of the combined cycle system.

Once the excess air has been extracted and expanded, method 300 proceeds to block 315 where the expanded air from the air expander is mixed with a combustible fuel to generate a heated combustion product. In the exemplary system 300, this mixing can be performed by fired heater 215. In fired heater 215, expanded air from air expander 210 is provided via stream 216, and a combustible fuel is provided via stream 230.

In exemplary system 200, a combustible fuel can be provided by low BTU fuel source 130. One example of a low BTU fuel source is a steel mill plant or process, which can provide blast furnace gas and coke oven gas to fuel a combined cycle power plant. In one embodiment, excess blast furnace gas is directed from the steel mill plant or process and provided as fuel to fired heater 215. In another embodiment, excess coke oven gas can be used.

In one embodiment, prior to mixing the combustible fuel with the expanded air, the combustible fuel can be conditioned to improve generation of the heated combustion product. For example, with reference to system 200 in FIG. 2, the low BTU fuel provided by source 130 can be conditioned prior to being provided to fired heater 215. In exemplary system 200, high pressure water heat exchanger 240 provides conditioning of the low BTU fuel using high pressure boiler feed water from HRSG 110. In one embodiment, when excess blast furnace gas is provided as the low BTU fuel, high pressure water heat exchanger 240 raises the temperature of the excess blast furnace gas prior to introducing it to fired heater 215 via stream 230. In doing so, high pressure water heat exchanger 240 improves the performance of fired heater 215 because less energy is required for combustion to produce a high temperature combustion product. It will be appreciated that when other fuels are used, they can likewise be conditioned in other ways to improve the generation of a heated combustion product.

Once receiving the combustible fuel, fired heater 215 mixes the expanded air with the combustible fuel to generate a heated combustion product. In the exemplary embodiment, a fired heater is used and, depending on the availability of combustible fuel at stream 230 and expanded air at 216, it can produce a heated combustion product with a temperature greater than 538°C at stream 220.

Having generated the heated combustion product at block 315, method 300 proceeds to block 320 where the heated combustion product is mixed with exhaust from gas turbine topping cycle 105. In the exemplary embodiment, this mixing is performed with a mixing tee. It will be appreciated that mixing the heated combustion product with the gas turbine exhaust can be performed in other ways as well.

Method 300 concludes at block 325 where the mixture of heated combustion product and gas turbine exhaust is introduced to a HRSG system. In exemplary system 200, the mixture of heated combustion product from fired heater 215 with exhaust from gas turbine topping cycle 105 results in a heated exhaust product with an average temperature greater than about 526°C being provided to HRSG 110. In legacy system 100, the heated exhaust product provided to HRSG 110 had an average temperature of less than about 510°C because of the cooling effect caused by mixing the lower temperature discharge air from the gas turbine compressor with the gas turbine exhaust. As previously described, this lowering of the exhaust product's temperature caused HRSG system 110 to produce less power. With a higher temperature, though, HRSG system 110 will produce more steam, and the steam turbine will produce more power.

In another embodiment, a portion of the heated combustion product can be used to modify the performance of the compressor in the combined cycle system. For example, system 200 can be modified to include a vapor absorption chiller that is indirectly connected to the inlet duct 106. At least a portion of the heated combustion product from fired heater 215 can then be provided to the vapor absorption chiller as a heat source. Using this heat source, the vapor absorption chiller can produce cooled media for cooling the inlet air temperature at compressor 110. With cooler air at the inlet, the efficiency of compressor 110 can be increased since less energy is required to compress cooler air when compared to warmer air. As the efficiency of compressor 110 increases, so does the efficiency of gas turbine topping cycle 105.

Many modifications and other embodiments of the inventions set forth herein will come to mind to one skilled in the art to which these inventions pertain having the benefit of the teachings presented in the foregoing descriptions and the associated drawings. Thus, it will be appreciated by those of ordinary skill in the art that the invention may be embodied in many forms and should not be limited to the embodiments described above. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiment of the present invention are defined by the following numbered clauses:
1. A method (300) for modifying power output and efficiency of a combined cycle power plant comprising a compressor (106) of a gas turbine (105), a combustor (120), and a heat recovery steam generator (110), the method comprising:
   extracting (305) excess air from the compressor (106);
   expanding (310) at least a portion of the extracted excess air to generate power;
   mixing (315) the expanded air with at least one combustible fuel for combustion to generate heated combustion product; and
   mixing (320) at least a portion of the heated combustion product with exhaust from the gas turbine (105), wherein the temperature of the exhaust is increased prior to introduction to the heat recovery steam generator (110).
2. The method (300) of clause 1, wherein expanding at least a portion of the extracted excess air to generate power comprises expanding at least a portion of the extracted air with an air expander (210).
3. The method (300) of clause 1, wherein mixing the expanded air with at least one combustible fuel to generate heated combustion product comprises mixing the expanded air with at least one combustible fuel in a fired heater (215).
4. The method (300) of clause 1, further comprising:
   directing at least a portion of the heated combustion product to cool air entering the compressor (106).
5. The method (300) of clause 4, wherein directing at least a portion of the heated combustion product to cool air entering the compressor (106) comprises cooling the entering air with a vapor absorption chiller.
6. The method (300) of clause 1, wherein the at least one combustible fuel comprises at least one of the following: a blast furnace gas and a low BTU gas.
7. The method (300) of clause 1, further comprising:
   providing a blast furnace gas;
   heating the blast furnace gas; and
   directing the heated blast furnace gas to mix with the expanded excess air to produce heated combustion product prior to mixing at least a portion of the combustion product with exhaust from the gas turbine (105).
8. The method (300) of clause 7, wherein providing the blast furnace gas comprises directing blast furnace gas from an industrial process or device.
9. The method (300) of clause 7, wherein heating the blast furnace gas comprises heating the blast furnace gas via a high pressure water heat exchanger (240).
10. The method (300) of clause 1, wherein at least a portion of the exhaust is directed to a location on the heat recovery steam generator (110).
11. A system (200) for modifying power output and efficiency of a combined cycle power plant, comprising:
   a compressor (110) of a gas turbine (105) operable to generate compressed air, wherein at least a portion of the compressed air is excess air and is extracted to maintain surge margin control of the gas turbine (105);
   a combustor (120) operable to mix at least a portion of the compressed air with at least one combustible fuel, wherein exhaust is generated by the gas turbine (105);
   at least one air expander operable to receive extracted excess air from the compressor and to expand the excess air to generate power;
   at least one fired heater (215) operable to receive the expanded excess air from the at least one air expander (210) and to mix the expanded air with at least one combustible fuel to generate heated combustion product; and
   a heat recovery steam generator (110) operable to receive at least a portion of the heated combustion product from the at least one fired heater (215) and the exhaust from the gas turbine (105).
12. The system (200) of clause 11, further comprising:
   a vapor absorption chiller operable to receive at least a portion of the heated combustion product from the at least one fired heater (215) and to provide cooled media which will cool air for the compressor (110).
13. The system (200) of clause 11 further comprising:
   at least one source of combustible fuel (130), and
   wherein the at least one fired heater (215) is further operable to receive the combustible fuel from the at least one source of combustible fuel (130).
14. The system (200) of clause 13, wherein the combustible fuel comprises at least one of the following: a blast furnace gas and a low BTU gas.
15. The system (200) of clause 13, further comprising:
   at least one high pressure water heat exchanger (240) operable to heat the combustible fuel prior to introduction to the at least one fired heater (215).
16. The system (200) of clause 13, wherein the combustible fuel originates from an industrial process or device.
17. The system (200) of clause 11, further comprising:
   at least one controller operable to control at least one of: the compressor (110), the combustor (120), the at least one air expander (210), and the at least one fired heater (215).
18. An apparatus for modifying power output and efficiency of a combined cycle power plant comprising a compressor (110) of a gas turbine (105), and a heat recovery steam generator (110), the apparatus comprising:
   at least one fired heater (215) operable to:
      receive expanded air and mix at least a portion of the expanded air with at least one combustible fuel,
      combust a mixture of expanded air and the at least one combustible fuel to generate heated combustion product, wherein the heated combustion product is mixed with exhaust from the gas turbine (105); and
      direct the mixture of heated combustion product and exhaust to the heat recovery steam generator (110).
19. The apparatus of clause 18, further comprising:
   at least one air expander (210) operable to provide expanded air to the at least one fired heater (215).
20. The apparatus of clause 18, further comprising:
   at least one vapor absorption chiller operable to receive at least a portion of the heated combustion product from the at least one fired heater (215) and operable to cool air for the compressor (110).

## Claims

1. A method (300) for modifying power output and efficiency of a combined cycle power plant comprising a compressor (106) of a gas turbine (105), a combustor (120), and a heat recovery steam generator (110), the method comprising:
extracting (305) excess air from the compressor (106);
expanding (310) at least a portion of the extracted excess air to generate power;
mixing (315) the expanded air with at least one combustible fuel for combustion to generate heated combustion product; and
mixing (320) at least a portion of the heated combustion product with exhaust from the gas turbine (105), wherein the temperature of the exhaust is increased prior to introduction to the heat recovery steam generator (110).

2. The method (300) of claim 1, further comprising:
directing at least a portion of the heated combustion product to cool air entering the compressor (106).

3. The method (300) of claim 1 or 2, further comprising:
providing a blast furnace gas;
heating the blast furnace gas; and
directing the heated blast furnace gas to mix with the expanded excess air to produce heated combustion product prior to mixing at least a portion of the combustion product with exhaust from the gas turbine (105).

4. The method (300) of any of the preceding claims, wherein at least a portion of the exhaust is directed to a location on the heat recovery steam generator (110).

5. A system (200) for modifying power output and efficiency of a combined cycle power plant, comprising:
a compressor (110) of a gas turbine (105) operable to generate compressed air, wherein at least a portion of the compressed air is excess air and is extracted to maintain surge margin control of the gas turbine (105);
a combustor (120) operable to mix at least a portion of the compressed air with at least one combustible fuel, wherein exhaust is generated by the gas turbine (105);
at least one air expander operable to receive extracted excess air from the compressor and to expand the excess air to generate power;
at least one fired heater (215) operable to receive the expanded excess air from the at least one air expander (210) and to mix the expanded air with at least one combustible fuel to generate heated combustion product; and
a heat recovery steam generator (110) operable to receive at least a portion of the heated combustion product from the at least one fired heater (215) and the exhaust from the gas turbine (105).

6. The system (200) of claim 5, further comprising:
a vapor absorption chiller operable to receive at least a portion of the heated combustion product from the at least one fired heater (215) and to provide cooled media which will cool air for the compressor (110).

7. The system (200) of claim 5 or 6, further comprising:
at least one source of combustible fuel (130), and
wherein the at least one fired heater (215) is further operable to receive the combustible fuel from the at least one source of combustible fuel (130).

8. The system (200) of any of claims 5 to 7, further comprising:
at least one high pressure water heat exchanger (240) operable to heat the combustible fuel prior to introduction to the at least one fired heater (215).

9. An apparatus for modifying power output and efficiency of a combined cycle power plant comprising a compressor (110) of a gas turbine (105), and a heat recovery steam generator (110), the apparatus comprising:
at least one fired heater (215) operable to:
receive expanded air and mix at least a portion of the expanded air with at least one combustible fuel,
combust a mixture of expanded air and the at least one combustible fuel to generate heated combustion product, wherein the heated combustion product is mixed with exhaust from the gas turbine (105); and
direct the mixture of heated combustion product and exhaust to the heat recovery steam generator (110).

10. The apparatus of claim 9, further comprising:
at least one air expander (210) operable to provide expanded air to the at least one fired heater (215).
